# EUROPEAN PATENT SPECIFICATION

(11) **EP 2 682 227 B1**
(45) Date of publication and mention of the grant of the patent: **13.08.2014**
(21) Application number: 13174749.5
(22) Date of filing: 02.07.2013
(51) Int. Cl.: B23Q 3/08, B23Q 3/18, B23Q 16/00, B25B 11/00

(54) **Unit for supporting plates of glass, marble, stone, wood, wood derivatives or the like on the work board of a machine for working the aforesaid plates with a valve for anti-water protection**
Einheit zur Positionierung von Platten aus Glas, Marmor, Stein, Holz, Holzderivate oder dergleichen auf der Arbeitsplatte einer Maschine zur Bearbeitung dieser Platten mit einem Wasserabscheider
Unité pour localiser en position des plaques de verre, marbre, pierre, bois, de matériaux dérivés du bois ou similaires sur la planche de travail d'une machine pour travailler les plaques précitées avec un séparateur d`eau

(30) Priority: 05.07.2012 IT TO20120593
(43) Date of publication of application: 08.01.2014
(73) Proprietor: Biesse S.p.A., 61122 Chiusa di Ginestreto (Pesaro Urbino) (IT)
(72) Inventor: Belli, Marco, I-61100 Saltara (Pesaro Urbino) (IT); Bindelli, Filippo, I-61100 Pesaro (IT)
(74) Representative: Notaro, Giancarlo

(56) References cited:
- WO-A1-2012/085446
- DE-A1- 19 615 382
- US-A- 5 562 276
- US-A1- 2012 049 430

## Description

The present invention relates to units for supporting plates of glass, marble, stone, wood, wood derivatives or the like on the working surface of a machine or work centre for machining the aforesaid plates.

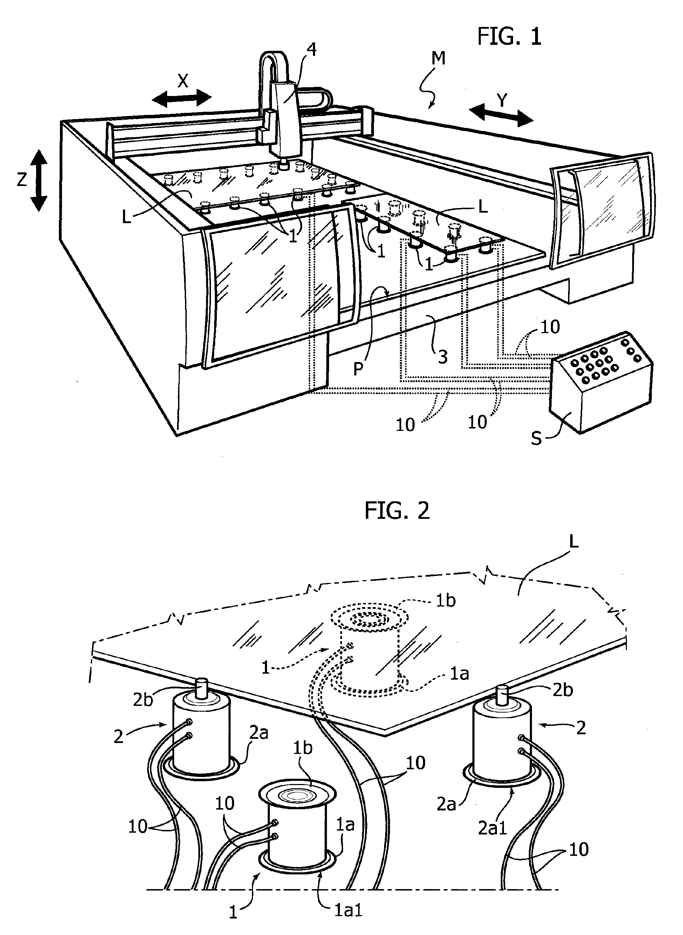

With reference to Figures 1 and 2, which regard the prior art, it is known to use suction-pad supporting units 1, which can be positioned on the working surface P for treating the plate L present on the surface itself during machining. The suction-pad supporting units 1 are constituted by independent blocks, which can be positioned, as desired, on the working surface P, according to the original size and shape of the plate to be machined and the size and shape that it is desired to obtain. Each supporting unit 1 is provided with a bottom suction-pad member 1a and a top suction-pad member 1b. The bottom suction-pad member 1a and the top suction-pad member 1b define, with the working surface P and with the surface of the plate L, respective chambers that can be set in communication with a source of vacuum S through a flexible connection hose 10 associated to each block. In this way, each suction-pad member provides for blocking of the unit 1 on the working surface P and for blocking of the plate L to be machined on the unit 1. Furthermore, for correct positioning of the plates L to be machined on the working surface P there are also available units 2 for locating the plates, against which the edges of the plates come to bear. The units 2 are equipped with retractable top locator members 2b and bottom suction-pad members 2a for blocking the units 2 on the working surface P. Also the bottom suction-pad members of the units 2 can be connected to a source of vacuum S to obtain anchorage of the units 2 to the working surface P.

The invention is designed in particular to be applied on machines M or work centres of the type comprising a workbench 3 (see Figure 1) defining the aforesaid working surface P, on which the plate to be machined L is located in position and fixed via the aforesaid units 2 and 1, and an operating head 4, which can be displaced on the workbench 3 along a number of mutually orthogonal axes (X, Y, Z) by means of respective electronically controlled motor means (not illustrated and not described in detail herein since they are in themselves known).

The main advantage of the above conventional solution lies in the fact that each supporting and/or locating unit can be positioned and withheld on the working surface in any point thereof, since the hoses that supply the vacuum enable easy displacement of each block into the desired position.

The disadvantage of the conventional solution described above lies, instead, mainly in the fact that the flexible hoses 10 constitute an encumbrance on the working surface P that proves at times troublesome for the operator, who has to position the suction-pad supporting units 1 and the locating units 2 between the various hoses 10.

In order to overcome the above drawback, the document No. WO 2012/085446 A1 has proposed a unit for supporting plates according to the preamble of Claim 1. This unit is provided with a source of vacuum inside it so that the flexible hoses for connection to an external source of vacuum are eliminated.

Also in the case of this solution, however, there remains a further problem, due to the fact that machining of the plates is carried out with simultaneous delivery of a jet of water. With the known solutions it is possible for a certain amount of water and machining sediments to drop onto the top suction pad during unloading of a piece that has been machined and from here to reach, through the intake duct, the pump that serves as source of vacuum, causing damage thereof.

The object of the present invention is to provide a unit for supporting plates that is equipped with an incorporated source of vacuum that is designed to overcome also the aforesaid problem due to the water that tends to rise as far as the vacuum pump.

With a view to achieving the above object, the subject of the invention is a unit for supporting plates having the characteristics specified in Claim 1.

Further preferred and advantageous characteristics of the above unit are specified in the dependent claims.

The invention also regards a machine for machining plates according to Claim **19**. Preferably, the machine according to the invention is also equipped with units for locating the plates as specified in Claim **22**.

Further characteristics and advantages of the present invention will emerge from the ensuing description with reference to the annexed drawings, which are provided purely by way of non-limiting example and in which:
- Figure 1 is an overall view of a work centre for automated machining of plates of glass, according to the known art;
- Figure 2 is a view at an enlarged scale of a detail of Figure 1, in which the units for supporting locating the plates are more clearly visible;
- Figure 3 is a schematic cross-sectional view of a supporting unit according to the present invention;
- Figure 4 is a schematic cross-sectional view of a different embodiment of the supporting unit of Figure 3,
- Figure 5 is a schematic cross-sectional view of a locating unit, which preferably forms part of the machine according to the present invention; and
- Figure 6 illustrates the portion of the machine or work centre according to the invention arranged in which is the magazine for charging the batteries of the units; and
- Figure 7 is a cross-sectional view of a preferred embodiment of the anti-water protection valve forming part of the supporting unit according to the invention.

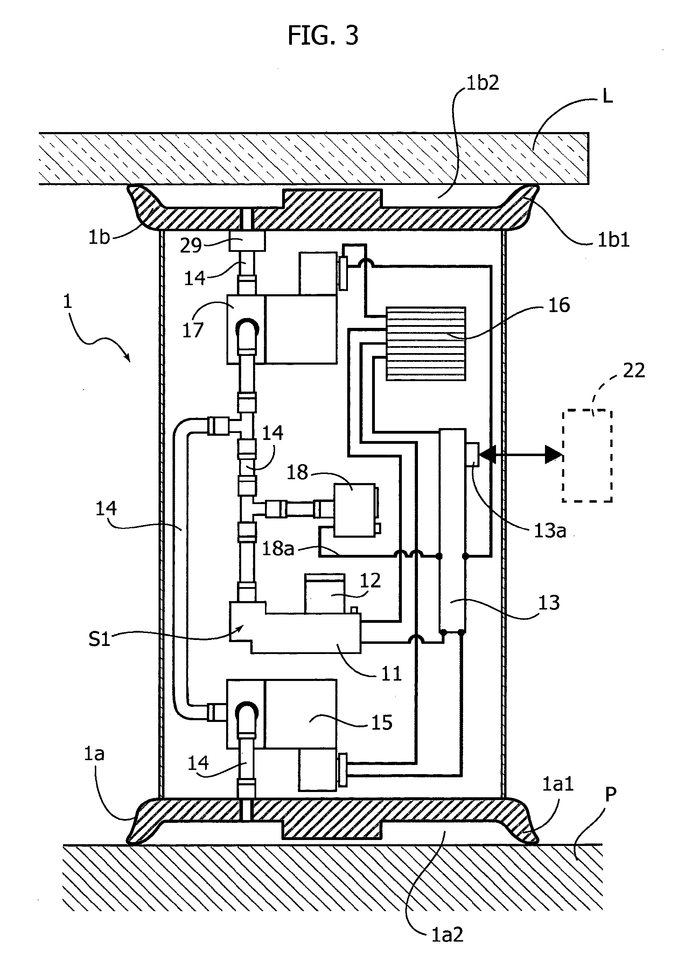

With reference to Figure 3, a unit 1 for supporting plates of glass comprises a body 1. At the bottom and top ends of this body 1, two suction-pad members are present, and in particular a bottom suction pad 1a and a top suction pad 1b. The suction pads 1a and 1b comprise, respectively, a first peripheral gasket 1a1 and a second peripheral gasket 1b1, which are carried by the body of the unit 1. The first and second gaskets are designed to delimit a first closed chamber 1a2 and a second closed chamber 1b2. In particular, the first gasket 1a1 defines the first closed chamber 1a2 between the bottom surface of the body 1 and the working surface P, whereas the second gasket 1b1 defines the second closed chamber 1b2 between the top surface of the body 1 and the plate to be machined L.

The two closed chambers 1a2 and 1b2 can be connected to a source of vacuum S1 to obtain anchorage, respectively, of the unit 1 to the working surface P and of the plate to be machined L to the unit 1.

In the embodiment illustrated in Figures 3-6, the source of vacuum S1 is provided within the body of the unit 1. The source of vacuum S1 comprises a pump 11 driven by an electric motor 12, for example an electric motor with 24-V supply. The electric motor 12 is controlled by an electronic control unit 13, which is also provided within the body 1 of the unit. In particular, the electronic unit 13 controls turning-on and turning-off of the aforesaid electric motor 12 of the source of vacuum S1.

Once again with reference to Figure 3, the source of vacuum S1 is connected to the aforesaid first chamber 1a2 of the bottom suction-pad member 1a by means of a duct 14 and to a first solenoid valve 15 controlled by the electronic unit 13.

The solenoid valve 15, by opening, is able to set in communication, through the duct 14, the source of vacuum S1 with the first closed chamber 1a2.

In particular, the electronic unit 13 is programmed for causing anchorage of the supporting unit 1 to the working surface P by activating, initially, the electric motor 12 of the source S1 and by opening the first solenoid valve 15 to communicate, through the duct 14, a vacuum to the first chamber 1a2, and by closing the first solenoid valve 15 so as to isolate the first chamber 1a2 at negative pressure, so that subsequently it is possible to de-activate the electric motor 12 without causing the vacuum to cease in the first chamber 1a2.

A first advantage as compared to known solutions of the type illustrated in Figures 1 and 2 is represented by energy saving. In known solutions, the source of vacuum S is constantly functioning, whereas in the case illustrated the source S1 is activated for the time necessary to create the vacuum and then, once the solenoid valve 15 has been closed, the source S1 can be de-activated.

Within the body 1 of the supporting unit an electric-supply battery 16 is provided. This battery 16 is connected to the source of vacuum S1, to the solenoid valve 15, and to the electronic control unit 13. Preferably, the battery 16 is of a rechargeable type. Otherwise, in an alternative embodiment (not illustrated) the supporting unit 1 is provided with means for connection to an external electric-supply source.

In the currently preferred embodiment illustrated, the supporting unit 1 comprises a single source of vacuum S1 provided in the body of the unit 1. The source of vacuum S1 is connected both to the first chamber 1a2 of the bottom suction-pad member 1a and to the second chamber 1b2 of the top suction-pad member 1b. As an alternative, it is possible to envisage providing two different sources of vacuum, the first connected to the first chamber 1a2 of the bottom suction-pad member 1a and the second connected to the second chamber 1b2 of the top suction-pad member 1b.

To return to the example illustrated in Figure 3, in which a single source of vacuum S1 is present, this source S1 is connected, via the aforesaid first solenoid valve 15, to the bottom suction-pad member 1a and, via a second solenoid valve 17, to the second chamber 1b2 of the top suction-pad member 1b.

The first solenoid valve 15 and the second solenoid valve 17 are controlled independently by the electronic control unit 13 provided in the body of the unit 1.

Once again in the case of the embodiment illustrated in Figure 3, the suction-pad supporting unit 1 moreover comprises also a sensor 18 for detecting the vacuum generated by the source of vacuum S1. The sensor 18 sends, via a communication line 18a, a signal to the electronic control unit 13 for governing start or arrest of the motor 12 of the source of vacuum S1. As soon as the degree of vacuum set is reached, the sensor will communicate to the control unit 13 this information, and the control unit will close the solenoid valves 15 and 17 and then will switch off the motor 12. The sensor 18 will be moreover able to detect a drop in the level of vacuum and to signal (once again by means of the communication line 18a) to the control unit 13 the need to re-activate the source of vacuum S1.

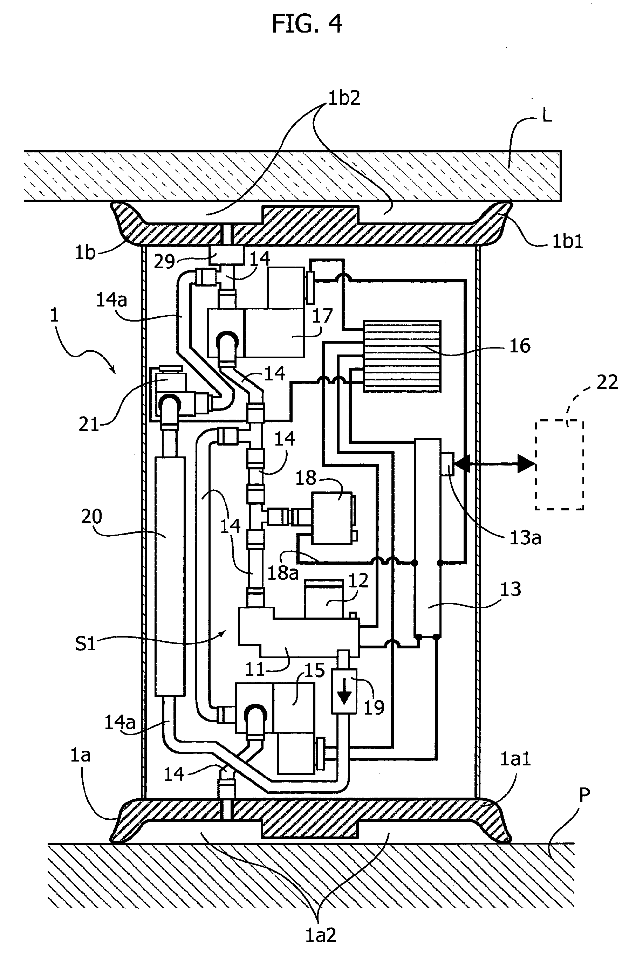

In the embodiment of Figure 4, the source of vacuum S1 may be switched to an operating mode in which it operates as pressure source in order to generate a flow of pressurized air that can be used for favouring detachment of the plate L from the top suction-pad member 1b

In this case, also a third solenoid valve 21 is present for connecting the second closed chamber 1b2 to the source S1 in the mode where it is functioning as pressure source. The third solenoid valve 21 is connected to the pressure source S1 by means of a duct 14a interposed in which is a pressurized-air tank 20. Moreover interposed in the aforesaid duct 14a is a non-return valve 19 that allows the flow only in the direction of the second closed chamber 1b2.

The electronic control unit 13 provided within the body 1 is configured to communicate by wireless transmission means 13a with an external electronic unit 22 for control of all the supporting units 1 and/or locating units 2 associated to the machine M. The electronic control unit 13 is remotely controlled, for example, with radio-frequency modalities (Wi-Fi, Bluetooth, etc.), by the external unit 22. As an alternative to the radio-frequency mode or equivalents, the communication may take place even in wired mode (solution not illustrated).

According to the most important characteristic of the present invention, the supporting unit 1 comprises in the above duct 14 between the second solenoid valve 17 and the second closed chamber 1b2 a valve 29 that allows flow of air from and to the second closed chamber 1b2 and prevents flow of water and debris towards the source of vacuum S1.

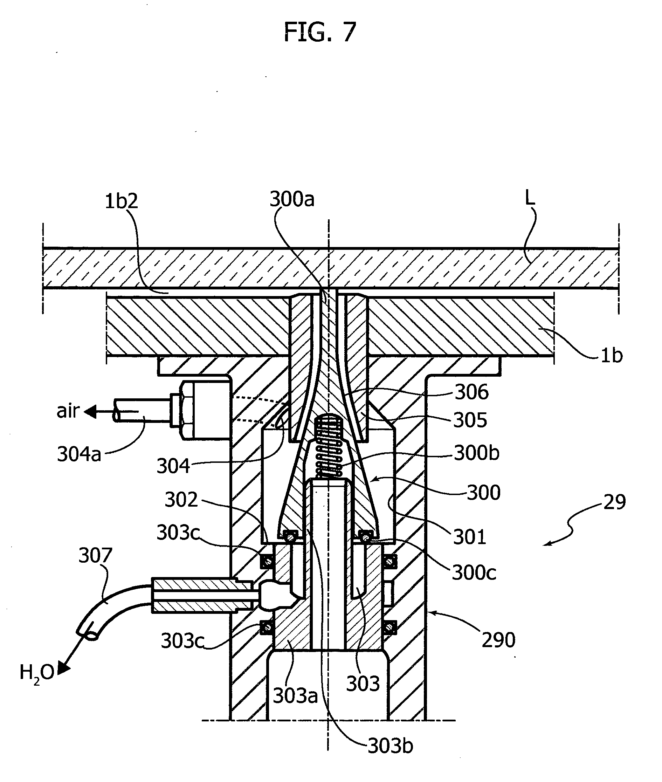

The valve 29 may be a valve in itself of a known type, but is preferably, instead, obtained according to the invention, in compliance with what is illustrated in Figure 7.

The above valve serves to safeguard the pump of the source of vacuum from the water used for machining purposes (in the case where materials are machined with the aid of water) and from the sediments produced during the abrasive action.

In fact, the current state of the art envisages that, during the action of vacuum pressure, in the duct there passes a small amount of water and machining sediments, which, during the step of unloading of the piece that has already been machined, drop onto the top suction pad. The pump of the source of vacuum is sensitive in regard to water and to the machining sediments. Hence, the presence of the valve 29 serves to prevent the water and sediments from entering the intake duct and reaching the pump. The valve 29 will consequently be able to discharge water and sediments that drop into the area of the second closed chamber 1b2 outside the unit 1 by means of a discharge duct, not illustrated in the figures.

Figure 7 of the annexed drawings shows the preferred embodiment of the valve 29. With reference to this figure, the valve 29 comprises a body 290 formed in which is a vertical channel 301, in which a valve member 300 is vertically mobile. The valve member 300 has a top nose 300a, which extends through an opening of the body of the suction-pad member 1b. The member 300 is recalled by a spring 300b towards a raised position, in which the tip of the top nose 300a projects above the body of the suction-pad member 1b. The spring 300b is set between the member 300 and an axial guide stem 303b, fixed with respect to the body of the valve, on which the member 300 is slidably mounted.

The guide stem 303b projects upwards from an element 303a fixed within the body of the valve, with interposition of sealing rings 303c.

The bottom part of the vertical channel 301 constitutes, together with the top face of the element 303a, a sump for draining the water. In the element 303a, starting from the top surface of the latter, an annular chamber 303 is obtained, which constitutes an opening for discharge of the water collected in the sump. The chamber 303 communicates on its bottom with a duct 306 for discharge of the water.

When a plate L is rested on the suction-pad member 1b it keeps, with its own weight, the mobile member 300 in the lowered position, illustrated in Figure 7, against the action of the spring 300b. In this condition, a sealing ring 300c carried by the bottom face of the mobile member 300 co-operates with the top face of the element 303a to isolate the space inside the channel 301 from the discharge opening 303. In this condition, the space inside the channel 301 can be set in vacuum in so far as it communicates with the source of vacuum via a duct 304a which gives out into a hole 304 on the wall of the channel 301, in a position raised with respect to the bottom sump having the discharge opening 303. Any possible reflux of water into the hole 304 is prevented by the fact that a skirt 305 is provided fixed with respect to the body of the valve and surrounding the mobile member 300 so as to define therewith an annular passage 306 which gives out onto the top surface of the suction-pad member 1b. The bottom end of the skirt 305 is beneath the level of the hole 304 so that the skirt masks this hole with respect to a possible flow of water through the annular passage 306.

Operation of the valve of Figure 7 is described hereinafter.

When a plate L is rested on the unit with the suction-pad member 1b, the mobile member 300 is pushed into its lowered position, against the action of the spring 300b, and thus keeps the space inside the vertical channel 301 isolated from the draining opening 303. In this condition, the space inside the channel is set in communication with the source of vacuum via the hole 304 and the duct 304a, and the this vacuum is communicated to the chamber 1b2 of the suction-pad member via the annular passage 306 so that the plate L is withheld in position.

When the plate L is raised at the end of the machining operation, it may happen that part of the flow of machining water and possible machining sediments drop into the sump through the annular passage 306. However, removal of the plate L causes return of the mobile member 300 into its raised position, under the action of the spring 300b. In this position, the sealing ring 300c is set at a distance from the top surface of the element 303a so that the water and any possible sediments are drained through the discharge opening 303 into the discharge duct 307. In this step, the skirt 305 masks the hole 304, preventing any reflux of water and/or sediments into the duct 304a.

When a new plate to be machined is positioned on the unit, the mobile member 300 isolates again the space inside the channel 301 from the discharge opening 303. Any possible residual amount of water that were to collect still on the bottom of the sump after lowering of the member 300 will be discharged in the next cycle, when the plate machined is removed again.

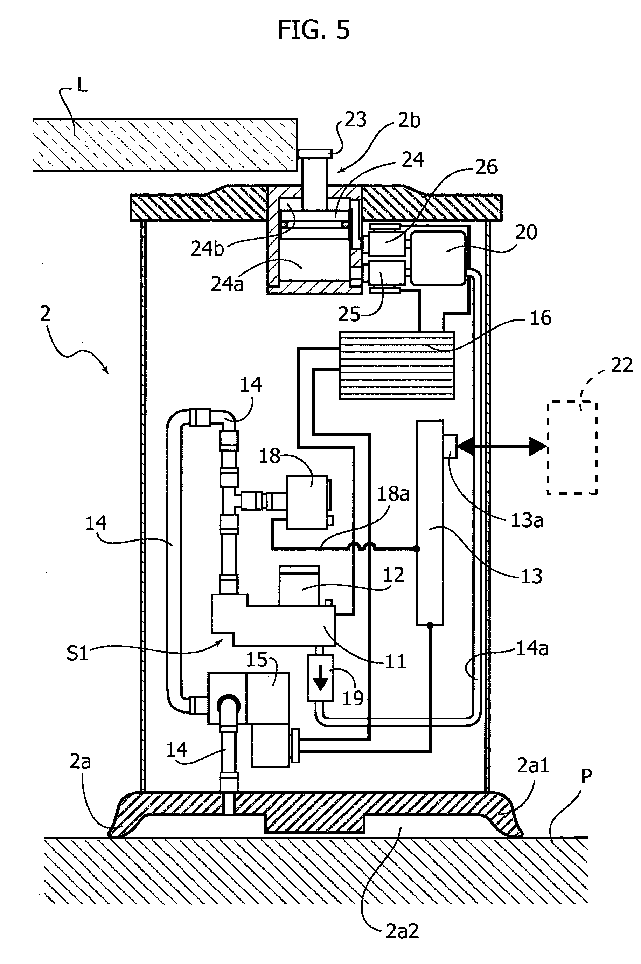

Figure 5 is a schematic representation of a unit 2 according to the invention, used for locating the plate L on the working surface P of the machine M. Preferably, the machine according to the invention is also equipped with locating units of this type, in addition to the supporting units described above.

In the sequel of the description the parts common to the supporting unit 1 will be designated with the same reference numbers also in the unit 2.

The locating unit 2 comprises a top locator member 23, which is vertically mobile between a raised, operative, position and a lowered, inoperative, position. The top locator member 23 is controlled by a pneumatic actuator 24 comprising two operating chambers 24a and 24b that can be connected to a pressure source. Preferably, the pressure source is constituted by the aforesaid source of vacuum S1, which, also in this case, is switchable to an operating mode in which it operates as pressure source.

The two operating chambers 24a and 24b of the actuator 24 are connected to the pressure source S1 by means of two respective solenoid valves 25 and 26. Furthermore, interposed in the connection between the source S1 and the actuator 24 is a compressed-air tank 20.

Also in this type of unit 2, a sensor 18 is present for detecting the vacuum generated by the source of vacuum S1, which is designed to send a signal on a communication line 18a to the electronic control unit 13. In the embodiment illustrated in Figure 5, the locating unit 2 also comprises a non-return valve 19, which allows flow only in the direction of the operating chambers 24a and 24b.

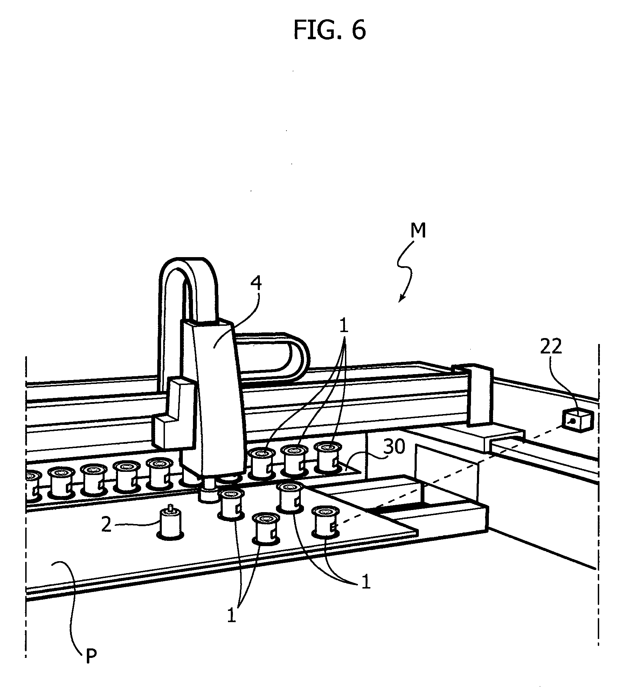

Figure 6 illustrates, instead, a machine M for machining plates of glass, marble, stone, wood, wood derivatives, or the like, which comprises as standard equipment a plurality of supporting units 1 and a plurality of locating units 2. The machine M illustrated has a battery-charger station 30, where there can be positioned both the supporting units 1 and the locating units 2 so that they can be recharged. According to a first embodiment, the units 1 and 2 are positioned manually in the battery-charger station 30. According to the embodiment illustrated, the machining head 4 of the machine positions the aforesaid supporting units 1 and/or locating units 2 on the workbench P in their operating position and/or in stand-by mode in a battery-charger station 30, in effect automating these operations.

Of course, without prejudice to the principle of the invention, the details of construction and the embodiments may vary widely with respect to what has been described and illustrated herein purely by way of example, without thereby departing from the scope of the present invention.

## Claims

1. A unit (1) for supporting plates (L) of glass, marble, stone, wood, wood derivatives, or the like on the working surface (P) of a machine (M) for machining said plates (L), said unit (1) comprising a bottom suction-pad member (1a) and a top suction-pad member (1b), respectively for anchorage of said unit (1) to the working surface (P) and of a plate (L) to said unit (1), said bottom and top suction-pad members (1a, 1b) each comprising a peripheral gasket (1a1, 1b1) carried by the body (1) of said unit and designed to delimit a closed chamber (1a2, 1b2), respectively, between the bottom surface of said body (1, 2) and the working surface (P) and between the top surface of said body (1) and the plate (L), each closed chamber (1a2, 1b2) being connectable to a source of vacuum (S1) provided within the body (1) of said unit to obtain anchorage of said plate (L) on said unit (1) and anchorage of said unit (1) on the working surface (P),
said unit being **characterized in that** interposed in the connection between said source of vacuum (S1) and the chamber of the top suction-pad member (1b) is an anti-water protection valve (29), configured for preventing any flow of water and/or debris towards the source of vacuum (S1) and **in that**:
- said protection valve (29) has a mobile member (300) set within a vertical channel (301) that is formed in the body (290) of said valve (29) and gives out onto the top face of the unit, said mobile member (300) being elastically recalled towards a raised position where it projects upwards from the top face of the unit; and
- said vertical channel (301) forms at its bottom end a bottom sump (302) with discharge openings (303) for drainage of the water and debris that penetrate into said channel (301) and communicates with the source of vacuum through a passage (304), which gives out onto the wall of said vertical channel (301), in a position raised with respect to said bottom sump (302),
- in such a way that when a plate (L) is rested on said unit (1), said mobile member (300) is pushed into a lowered position, where it isolates the environment inside said channel (301) which communicates with the source of vacuum from said discharge openings (303), so as to guarantee communication of the vacuum to the chamber (1b2) of the top suction-pad member (1b),
- whereas, when the plate (L) is removed from the unit (1), said mobile member (300) is brought into its raised position, where the water and the debris penetrated into the vertical channel (301) can reach the aforesaid discharge openings (303).

2. The unit according to Claim 1, **characterized in that** said valve (29) comprises a fixed skirt (305), which surrounds said mobile member (300) so as to define an annular passage (306) therewith and terminates with a bottom end positioned lower than said passage (304) which gives out onto the wall of said vertical channel (301) and which communicates with the source of vacuum in such a way that said skirt (305) masks said passage (304), preventing the water and debris directed towards the discharge openings (303) from possibly entering the aforesaid passage (304).

3. The unit according to any one of the preceding claims, **characterized in that** said mobile member (300) is slidably mounted on an axial guide stem (303b) projecting from an element (303a) fixed to, or made of a single piece with, the body of the valve (29), in which the discharge openings (303) are formed.

4. The unit according to any one of the preceding claims, **characterized in that** said source of vacuum (S1) comprises a pump (11) driven by an electric motor (12).

5. The unit according to Claim 4, **characterized in that** said electric motor (12) is controlled by an electronic control unit (13) provided within said body (1, 2).

6. The unit according to Claim 5, **characterized in that** said source of vacuum (S1) can be connected to the aforesaid chamber (1a2) of the bottom suction-pad member (1a) by means of a first solenoid valve (15) controlled by said electronic control unit (13).

7. The unit according to Claim 5, **characterized in that** said electronic control unit (13) is programmed for causing anchorage of said supporting unit (1, 2) to said working surface (P) by activating initially said electric motor (12) and opening said first solenoid valve (15) to supply a vacuum to said chamber (1a2) and closing said first solenoid valve (15), so as to isolate said chamber (1a2, 2a2) at negative pressure, in order to be subsequently able to de-activate the electric motor (12) without causing the vacuum in said chamber (1a2) to cease.

8. The unit according to any one of the preceding claims, **characterized in that** within said body (1, 2) an electric-supply battery (16) is provided.

9. The unit according to Claim 8, **characterized in that** said battery (16) is of a rechargeable type.

10. The unit according to any one of Claims 1 to 7, **characterized in that** it is provided with means for connection to an external electric-supply source.

11. The unit according to Claim 1, **characterized in that** it comprises a single source of vacuum (S1) provided in the body (1) of said unit, which can be connected both to said chamber (1a2) of said bottom suction-pad member (1a) and to said chamber (1b2) of said top suction-pad member (1b).

12. The unit according to Claim 11, **characterized in that** said single source of vacuum (S1) can be connected to the aforesaid first and second chambers (1a2, 1b2) of the bottom and top suction-pad members (1a, 1b) by means of a first solenoid valve (15) and a second solenoid valve (17), respectively.

13. The unit according to Claim 11, **characterized in that** said first solenoid valve (15) and second solenoid valve (17) are controlled independently by an electronic control unit (13) provided in said body (1).

14. The unit according to Claim 1, **characterized in that** it comprises sensor means (18) for detecting the vacuum generated by said source of vacuum (S1), which are designed to send a signal to an electronic control unit (13).

15. The unit according to any one of the preceding claims, **characterized in that** said source of vacuum (S1) is switchable into an operating mode in which it operates as pressure source in order to generate a flow of pressurized air that can be used for favouring detachment of said plate (L) from said top suction-pad member (1b).

16. The unit according to Claim 15, **characterized in that** it comprises a third solenoid valve (21) for connecting the chamber (1b2) of the top suction-pad member to said source of vacuum (S1) in the mode where it functions as pressure source.

17. The unit according to Claim 16, **characterized in that** said third solenoid valve (21) is connected to said source (S1) by means of a duct (14a) in which a pressurized-air tank (20) is interposed.

18. The unit according to Claim 1, **characterized in that** it has an electronic control unit (13) provided within said body (1) and configured to communicate by wireless-transmission means (13a) with an external electronic unit (22) for control of all the supporting units (1) associated to the machine (M).

19. A machine for machining plates of glass, marble, stone, wood, wood derivatives, or the like, **characterized in that** it comprises one or more units (1) for supporting said plates (L) according to any one of the preceding claims.

20. The machine according to Claim 19, **characterized in that** said machine comprises a battery-charger station (30) where the supporting units (1) can be positioned.

21. The machine according to Claim 20, **characterized in that** it has a working head (4) that is able to set the aforesaid supporting units (1) in their operating position and/or in stand-by mode in the aforesaid battery-charger station (30).

22. The machine according to Claim 19, **characterized in that** it further comprises one or more units for locating the plates (L) comprising a bottom suction-pad member for anchorage on the working surface, a source of vacuum inside the body (1) of said locating unit, and a top locator member (23) vertically mobile between a raised, operative, position and a lowered, inoperative, position, said top locator member (23) being controlled by a pneumatic actuator (24) comprising at least one operating chamber (24a) that can be connected to a pressure source (S1), said pressure source (S1) being constituted by the aforesaid source of vacuum (S1), which is switchable into an operating mode in which it operates as pressure source.

## Patentansprüche

1. Einheit (1) zur Positionierung von Platten (L) aus Glas, Marmor, Stein, Holz, Holzderivaten oder dergleichen auf der Arbeitsfläche (P) einer Maschine (M) zur Bearbeitung dieser Platten (L), wobei die Einheit (1) ein unteres Sauggreiferelement (1a) und ein oberes Sauggreiferelement (1b) zur Verankerung der Einheit (1) an der Arbeitsfläche (P) bzw. einer Platte (L) an der Einheit (1) umfasst, wobei das untere und obere Sauggreiferelement (1a, 1b) jeweils eine periphere Flachdichtung (1a1, 1b1) umfassen, die durch den Körper (1) der Einheit getragen wird und so ausgestaltet ist, dass sie einen geschlossenen Raum (1a2, 1b2) zwischen der unteren Oberfläche des Körpers (1, 2) und der Arbeitsfläche (P) bzw. zwischen der oberen Oberfläche des Körpers (1) und der Platte (L) begrenzt, wobei jeder geschlossene Raum (1a2, 1b2) mit einer innerhalb des Körpers (1) der Einheit vorgesehenen Vakuumquelle (S1) verbindbar ist, um eine Verankerung der Platte (L) auf der Einheit (1) und eine Verankerung der Einheit (1) auf der Arbeitsfläche (P) zu erreichen,
wobei die Einheit **dadurch gekennzeichnet ist, dass** in der Verbindung zwischen der Vakuumquelle (S1) und dem Raum des oberen Sauggreiferelements (1b) ein Wasserabscheider (29) angeordnet ist, der so ausgestaltet ist, dass er den Durchfluss von Wasser und/oder Schmutz in Richtung der Vakuumquelle (S1) verhindert, und dadurch, dass:
- der Abscheider (29) ein bewegliches Element (300) aufweist, das innerhalb eines vertikalen Kanals (301) angeordnet ist, der im Körper (290) des Abscheiders (29) ausgebildet ist und auf die obere Oberfläche der Einheit mündet, wobei das bewegliche Element (300) elastisch in Richtung einer angehobenen Position zurückgeholt wird, in der es von der oberen Oberfläche der Einheit nach oben vorsteht; und
- der vertikale Kanal (301) an seinem unteren Ende einen unteren Sammelbehälter (302) mit Austrittsöffnungen (303) zur Ableitung des in den Kanal (301) gelangenden Wassers und Schmutzes ausbildet und an einer gegenüber dem unteren Sammelbehälter (302) erhöhten Position über einen Durchlass (304), der auf die Wand des vertikalen Kanals (301) mündet, mit der Vakuumquelle verbunden ist,
- derart dass, wenn eine Platte (L) auf die Einheit (1) aufgelegt wird, das bewegliche Element (300) in eine abgesenkte Position geschoben wird, in der es die mit der Vakuumquelle verbundene Umgebung im Inneren des Kanals (301) von den Austrittsöffnungen (303) isoliert, um eine Verbindung des Vakuums mit dem Raum (1b2) des oberen Sauggreiferelements (1b) zu gewährleisten,
- wohingegen, wenn die Platte (L) von der Einheit (1) abgenommen wird, das bewegliche Element (300) in seine angehobene Position gebracht wird, in der das Wasser und der Schmutz, die in den vertikalen Kanal (301) gelangt sind, die vorgenannten Austrittsöffnungen (303) erreichen können.

2. Einheit nach Anspruch 1, **dadurch gekennzeichnet, dass** der Abscheider (29) einen feststehenden Rand (305) umfasst, der das bewegliche Element (300) umgibt, so dass er mit diesem einen ringförmigen Durchlass (306) definiert, und mit einem unteren Ende endet, das niedriger positioniert ist als der Durchlass (304), der auf die Wand des vertikalen Kanals (301) mündet und derart mit der Vakuumquelle verbunden ist, dass der Rand (305) den Durchlass (304) verdeckt und so verhindert, dass das Wasser und der Schmutz, die in Richtung der Austrittsöffnungen (303) geleitet werden, möglicherweise in den vorgenannten Durchlass (304) gelangen.

3. Einheit nach einem der vorangehenden Ansprüche, **dadurch gekennzeichnet, dass** das bewegliche Element (300) verschiebbar auf einem axialen Führungsstab (303b) angebracht ist, der von einem Element (303a) vorsteht, das am Körper des Abscheiders (29) befestigt oder einstückig mit diesem ausgebildet ist, in dem die Austrittsöffnungen (303) ausgebildet sind.

4. Einheit nach einem der vorangehenden Ansprüche, **dadurch gekennzeichnet, dass** die Vakuumquelle (S1) eine durch einen Elektromotor (12) angetriebene Pumpe (11) umfasst.

5. Einheit nach Anspruch 4, **dadurch gekennzeichnet, dass** der Elektromotor (12) durch eine innerhalb des Körpers (1, 2) bereitgestellte elektronische Steuereinheit (13) gesteuert wird.

6. Einheit nach Anspruch 5, **dadurch gekennzeichnet, dass** die Vakuumquelle (S1) über ein durch die elektronische Steuereinheit (13) gesteuertes erstes Magnetventil (15) mit dem vorgenannten Raum (1a2) des unteren Sauggreiferelements (1a) verbunden sein kann.

7. Einheit nach Anspruch 5, **dadurch gekennzeichnet, dass** die elektronische Steuereinheit (13) so programmiert ist, dass sie die Verankerung der Trageeinheit (1, 2) an der Arbeitsfläche (P) bewirkt, indem sie zunächst den Elektromotor (12) aktiviert und das erste Magnetventil (15) öffnet, um den Raum (1a2) mit einem Vakuum zu beaufschlagen, und dann das erste Magnetventil (15) schließt, um den Raum (1a2, 2a2) bei Unterdruck zu isolieren, um nachfolgend den Elektromotor (12) deaktivieren zu können, ohne einen Abfall des Vakuums in dem Raum (1a2) zu bewirken.

8. Einheit nach einem der vorangehenden Ansprüche, **dadurch gekennzeichnet, dass** innerhalb des Körpers (1, 2) eine Elektroversorgungsbatterie (16) vorgesehen ist.

9. Einheit nach Anspruch 8, **dadurch gekennzeichnet, dass** die Batterie (16) wiederaufladbar ist.

10. Einheit nach einem der Ansprüche 1 bis 7, **dadurch gekennzeichnet, dass** sie mit Mitteln zur Verbindung mit einer externen Elektroversorgungsquelle versehen ist.

11. Einheit nach Anspruch 1, **dadurch gekennzeichnet, dass** sie eine einzige, im Körper (1) der Einheit vorgesehene Vakuumquelle (S1) umfasst, die sowohl mit dem Raum (1a2) des unteren Sauggreiferelements (1a) als auch mit dem Raum (1b2) des oberen Sauggreiferelements (1b) verbunden sein kann.

12. Einheit nach Anspruch 11, **dadurch gekennzeichnet, dass** die einzige Vakuumquelle (S1) über ein erstes Magnetventil (15) bzw. ein zweites Magnetventil (17) mit dem vorgenannten ersten und zweiten Raum (1a2, 1b2) des unteren und oberen Sauggreiferelements (1a, 1b) verbunden sein kann.

13. Einheit nach Anspruch 11, **dadurch gekennzeichnet, dass** das erste Magnetventil (15) und das zweite Magnetventil (17) unabhängig voneinander durch eine im Körper (1) vorgesehene elektronische Steuereinheit (13) gesteuert werden.

14. Einheit nach Anspruch 1, **dadurch gekennzeichnet, dass** sie Sensormittel (18) zur Erfassung des durch die Vakuumquelle (S1) erzeugten Vakuums umfasst, die so ausgestaltet sind, dass sie ein Signal an eine elektronische Steuereinheit (13) senden.

15. Einheit nach einem der vorangehenden Ansprüche, **dadurch gekennzeichnet, dass** die Vakuumquelle (S1) in einen Betriebsmodus schaltbar ist, in dem sie als Druckquelle arbeitet, um einen Druckluftstrom zu erzeugen, der zur Unterstützung der Lösung der Platte (L) vom oberen Sauggreiferelement (1b) verwendet werden kann.

16. Einheit nach Anspruch 15, **dadurch gekennzeichnet, dass** sie ein drittes Magnetventil (21) umfasst, um in dem Modus, in dem sie als Druckquelle fungiert, den Raum (1b2) des oberen Sauggreiferelements mit der Vakuumquelle (S1) zu verbinden.

17. Einheit nach Anspruch 16, **dadurch gekennzeichnet, dass** das dritte Magnetventil (21) über eine Leitung (14a), in der ein Druckluftbehälter (20) angeordnet ist, mit der Quelle (S1) verbunden ist.

18. Einheit nach Anspruch 1, **dadurch gekennzeichnet, dass** sie eine elektronische Steuereinheit (13) aufweist, die innerhalb des Körpers (1) vorgesehen und so ausgestaltet ist, dass sie über drahtlose Übertragungsmittel (13a) mit einer externen elektronischen Einheit (22) zur Steuerung aller der Maschine (M) zugeordneten Trageeinheiten (1) kommuniziert.

19. Maschine zur Bearbeitung von Platten aus Glas, Marmor, Stein, Holz, Holzderivaten oder dergleichen, **dadurch gekennzeichnet, dass** sie eine oder mehrere Einheit(en) (1) zum Tragen dieser Platten (L) nach einem der vorangehenden Ansprüche umfasst.

20. Maschine nach Anspruch 19, **dadurch gekennzeichnet, dass** die Maschine eine Batterieladestation (30) umfasst, in der die Trageeinheiten (1) positioniert sein können.

21. Maschine nach Anspruch 20, **dadurch gekennzeichnet, dass** sie einen Arbeitskopf (4) aufweist, der die vorgenannten Trageeinheiten (1) in ihrer Betriebsposition und/oder im Standby-Modus in der vorgenannten Batterieladestation (30) anordnen kann.

22. Maschine nach Anspruch 19, **dadurch gekennzeichnet, dass** sie weiterhin eine oder mehrere Einheit(en) zur Positionierung der Platten (L) umfasst, umfassend: ein unteres Sauggreiferelement zur Verankerung auf der Arbeitsfläche, eine Vakuumquelle innerhalb des Körpers (1) der Positionierungseinheit und ein oberes Positionierungselement (23), das zwischen einer angehobenen, betriebsfähigen Position und einer abgesenkten, nicht betriebsfähigen Position vertikal beweglich ist, wobei das obere Positionierungselement (23) durch einen pneumatischen Aktuator (24) gesteuert wird, der wenigstens einen Betriebsraum (24a) umfasst, der mit einer Druckquelle (S 1) verbunden sein kann, wobei die Druckquelle (S 1) durch die vorgenannte Vakuumquelle (S1) ausgebildet ist, die in einen Betriebmodus schaltbar ist, in dem sie als Druckquelle arbeitet.

## Revendications

1. Unité (1) pour supporter des plaques (L) de verre, de marbre, de pierre, de bois, de dérivés de bois ou autre analogue, sur la surface de travail (P) d'une machine (M) pour l'usinage desdites plaques (L), ladite unité (1) comprenant un élément de ventouse inférieur (1a) et un élément de ventouse supérieur (1 b), respectivement pour l'ancrage de ladite unité (1) sur la surface de travail (P) et d'une plaque (L) sur ladite unité (1), lesdits éléments de ventouse inférieur et supérieur (1a, 1b) comprenant chacun un joint d'étanchéité périphérique (1a1, 1b1) porté par le corps (1) de ladite unité et conçu pour délimiter une chambre fermée (1 a2, 1 b2), respectivement, entre la surface inférieure dudit corps (1, 2) et la surface de travail (P) et entre la surface supérieure dudit corps (1) et la plaque (L), chaque chambre fermée (1 a2, 1 b2) pouvant être reliée à une source de vide (S1) prévue à l'intérieur du corps (1) de ladite unité pour obtenir un ancrage de ladite plaque (L) sur ladite unité (1) et un ancrage de ladite unité (1) sur la surface de travail (P),
ladite unité étant **caractérisée en ce qu'**une soupape de protection anti-eau (29), configurée pour empêcher tout écoulement d'eau et/ou de débris vers la source de vide (S1), est interposée dans la connexion entre ladite source de vide (S1) et la chambre de l'élément de ventouse supérieur (1 b), et **en ce que** :
- ladite soupape de protection (29) a un élément mobile (300) placé à l'intérieur d'un canal vertical (301) qui est formé dans le corps (290) de ladite soupape (29) et qui donne sur la face supérieure de l'unité, ledit élément mobile (300) étant rappelé de manière élastique vers une position surélevée où il fait saillie vers le haut à partir de la face supérieure de l'unité ; et
- ledit canal vertical (301) forme au niveau de son extrémité inférieure un carter inférieur (302) avec des ouvertures d'évacuation (303) pour le drainage de l'eau et des débris qui pénètrent dans ledit canal (301) et communique avec la source de vide à travers un passage (304) qui donne sur la paroi dudit canal vertical (301), dans une position surélevée par rapport audit carter inférieur (302),
- de telle sorte que, lorsqu'une plaque (L) repose sur ladite unité (1), ledit élément mobile (300) soit poussé dans une position abaissée, où il isole l'environnement à l'intérieur dudit canal (301) qui communique avec la source de vide à partir desdites ouvertures d'évacuation (303), de manière à garantir une communication du vide avec la chambre (1b2) de l'élément de ventouse supérieur (1 b),
- tandis que, lorsque la plaque (L) est retirée de l'unité (1), ledit élément mobile (300) est amené dans sa position surélevée, où l'eau et les débris qui pénètrent dans le canal vertical (301) peuvent atteindre les ouvertures d'évacuation (303) précitées.

2. Unité selon la revendication 1, **caractérisée en ce que** ladite soupape (29) comprend une jupe fixe (305), qui entoure ledit élément mobile (300) de manière à définir un passage annulaire (306) avec celui-ci et qui se termine avec une extrémité inférieure positionnée plus bas que ledit passage (304) qui donne sur la paroi dudit canal vertical (301) et qui communique avec la source de vide de telle sorte que ladite jupe (305) masque ledit passage (304), empêchant l'eau et les débris dirigés vers les ouvertures d'évacuation (303) d'entrer éventuellement dans le passage (304) précité.

3. Unité selon l'une quelconque des revendications précédentes, **caractérisée en ce que** ledit élément mobile (300) est monté en coulissement sur une tige de guidage axiale (303b) faisant saillie à partir d'un élément (303a) fixé au corps de la soupape (29), ou réalisé d'un seul tenant avec celui-ci, où les ouvertures d'évacuation (303) sont formées.

4. Unité selon l'une quelconque des revendications précédentes, **caractérisée en ce que** ladite source de vide (S1) comprend une pompe (11) entraînée par un moteur électrique (12).

5. Unité selon la revendication 4, **caractérisée en ce que** ledit moteur électrique (12) est commandé par une unité de commande électronique (13) prévue à l'intérieur dudit corps (1, 2).

6. Unité selon la revendication 5, **caractérisée en ce que** ladite source de vide (S1) peut être connectée à la chambre précitée (1a2) de l'élément de ventouse inférieur (1a) au moyen d'une première électrovanne (15) commandée par ladite unité de commande électronique (13).

7. Unité selon la revendication 5, **caractérisée en ce que** ladite unité de commande électronique (13) est programmée pour provoquer l'ancrage de ladite unité de support (1, 2) sur ladite surface de travail (P) en activant initialement ledit moteur électrique (12) et en ouvrant ladite première électrovanne (15) pour créer un vide dans ladite chambre (1 a2) et pour fermer ladite première électrovanne (15), de manière à isoler ladite chambre (1a2, 2a2) à une pression négative, afin de pouvoir ensuite désactiver le moteur électrique (12) sans interrompre le vide dans ladite chambre (1 a2).

8. Unité selon l'une quelconque des revendications précédentes, **caractérisée en ce qu'**une batterie d'alimentation électrique (16) est prévue à l'intérieur dudit corps (1, 2).

9. Unité selon la revendication 8, **caractérisée en ce que** ladite batterie (16) est de type rechargeable.

10. Unité selon l'une quelconque des revendications 1 à 7, **caractérisée en ce qu'**elle est pourvue de moyens pour une connexion à une source d'alimentation électrique externe.

11. Unité selon la revendication 1, **caractérisée en ce qu'**elle comprend une source unique de vide (S1) prévue dans le corps (1) de ladite unité, qui peut être connectée à la fois à ladite chambre (1a2) dudit élément de ventouse inférieur (1a) et à ladite chambre (1b2) dudit élément de ventouse supérieur (1 b).

12. Unité selon la revendication 11, **caractérisée en ce que** ladite source unique de vide (S1) peut être connectée aux première et deuxième chambres précitées (1 a2, 1 b2) des éléments de ventouse inférieur et supérieur (1a, 1b) au moyen d'une première électrovanne (15) et d'une deuxième électrovanne (17), respectivement.

13. Unité selon la revendication 11, **caractérisée en ce que** lesdites première électrovanne (15) et deuxième électrovanne (17) sont commandées de manière indépendante par une unité de commande électronique (13) prévue dans ledit corps (1).

14. Unité selon la revendication 1, **caractérisée en ce qu'**elle comprend des moyens de capteur (18) pour la détection du vide généré par ladite source de vide (S1), qui est conçu pour envoyer un signal à une unité de commande électronique (13).

15. Unité selon l'une quelconque des revendications précédentes, **caractérisée en ce que** ladite source de vide (S1) peut commuter vers un mode de fonctionnement dans lequel elle fonctionne en tant que source de pression afin de générer un flux d'air sous pression qui peut être utilisé pour favoriser le détachement de ladite plaque (L) dudit élément de ventouse supérieur (1 b).

16. Unité selon la revendication 15, **caractérisée en ce qu'**elle comprend une troisième électrovanne (21) pour relier la chambre (1b2) de l'élément de ventouse supérieur à la source de vide (S1) dans le mode où elle fonctionne en tant que source de pression.

17. Unité selon la revendication 16, **caractérisée en ce que** ladite troisième électrovanne (21) est connectée à ladite source (S1) au moyen d'un conduit (14a) dans lequel un réservoir d'air sous pression (20) est interposé.

18. Unité selon la revendication 1, **caractérisée en ce qu'**elle a une unité de commande électronique (13) prévue à l'intérieur dudit corps (1) et configurée pour communiquer par des moyens de transmission sans fil (13a) avec une unité électronique externe (22) pour la commande de toutes les unités de support (1) associées à la machine (M).

19. Machine pour l'usinage des plaques de verre, de marbre, de pierre, de bois, de dérivés de bois ou autre analogue, **caractérisée en ce qu'**elle comprend une ou plusieurs unité(s) (1) pour supporter lesdites plaques (L) selon l'une quelconque des revendications précédentes.

20. Machine selon la revendication 19, **caractérisée en ce que** ladite machine comprend une station de chargeur de batterie (30) où les unités de support (1) peuvent être positionnées.

21. Machine selon la revendication 20, **caractérisée en ce qu'**elle a une tête de travail (4) qui est capable de régler les unités de support (1) précitées dans leur position de fonctionnement et/ou dans un mode de repos dans la station de chargeur de batterie (30) précitée.

22. Machine selon la revendication 19, **caractérisée en ce qu'**elle comprend en outre une ou plusieurs unité(s) pour le positionnement des plaques (L) comprenant un élément de ventouse inférieur pour l'ancrage sur la surface de travail, une source de vide à l'intérieur du corps (1) de ladite unité de positionnement, et un élément de positionnement supérieur (23) mobile verticalement entre une position surélevée opérationnelle et une position abaissée non opérationnelle, ledit élément de positionnement supérieur (23) étant commandé par un actionneur pneumatique (24) comprenant au moins une chambre de fonctionnement (24a) qui peut être connectée à une source de pression (S1), ladite source de pression (S1) étant constituée par la source de vide (S1) précitée, qui peut commuter vers un mode de fonctionnement dans lequel elle fonctionne en tant que source de pression.
